# EUROPEAN PATENT APPLICATION

(11) **EP 4 836 456 A1**
(43) Date of publication of application: **04.11.2026**
(21) Application number: 24910907.5
(22) Date of filing: 19.12.2024
(51) Int. Cl.: H04W 4/029

(54) **POSITION INFORMATION REPORTING METHOD AND APPARATUS, POSITION INFORMATION RECEIVING METHOD AND APPARATUS, POSITION INFORMATION PROCESSING METHOD AND APPARATUS, DEVICE, AND READABLE STORAGE MEDIUM**

(30) Priority: 26.12.2023 CN 202311816191
(71) Applicant: Vivo Mobile Communication Co., Ltd., Dongguan, Guangdong 523863 (CN)
(72) Inventor: WANG, Wen, Dongguan, Guangdong 523863 (CN); ZHANG, Yanxia, Dongguan, Guangdong 523863 (CN); ZHANG, Di, Dongguan, Guangdong 523863 (CN); HE, Ranran, Dongguan, Guangdong 523863 (CN)
(74) Representative: dompatent
(86) International application number: PCT/CN2024/140459
(87) International publication number: WO 2025/139976

(57) **Abstract**

The present application relates to the technical field of communications, and in particular to a position information reporting method and apparatus, a position information receiving method and apparatus, a position information processing method and apparatus, a device, and a readable storage medium. The method comprises : a terminal acquires first information; and on the basis of the first information, the terminal sends position information of the terminal to a core network device, wherein the position information of the terminal is comprised in a first NAS message.

## Description

### CROSS-REFERENCE TO RELATED APPLICATIONS

This application claims priority to Chinese Patent Application No. 202311816191.4, filed in China on December 26, 2023, which is incorporated herein by reference in its entirety.

### TECHNICAL FIELD

This application pertains to the field of communication technologies, and specifically relates to a method and apparatus for reporting, receiving, and processing location information, a device, and a readable storage medium.

### BACKGROUND

In some scenarios involving movement of terminal devices or movement of network devices, for example, in a non-terrestrial network (Non-Terrestrial Networks, NTN), it is crucial for the network side to obtain location information of a terminal, for example, this helps the network perform mobility management. Sending location information through radio resource control (Radio Resource Control, RRC) signaling requires access stratum (Access Stratum, AS) security, and for a terminal without AS security, a mechanism of a terminal reporting location information in the related art is not applicable. Therefore, this application needs to solve the problem of how to enable a terminal to report location information in the absence of AS security.

### SUMMARY

Embodiments of this application provide a method and apparatus for reporting, receiving, and processing location information, a device, and a readable storage medium, so as to solve the problem of how to enable a terminal to report location information in the absence of AS security.

According to a first aspect, a method for reporting location information is provided, including:
obtaining, by a terminal, first information; and
sending, by the terminal based on the first information, location information of the terminal to a core network device; where
the location information of the terminal is included in a first NAS message.

According to a second aspect, a method for receiving location information is provided, including:
receiving, by a core network device from a terminal, location information of the terminal; where
the location information of the terminal is included in a first NAS message.

According to a third aspect, a method for processing location information is provided, including:
receiving, by an access network device from a core network device, location information of a terminal;
determining, by the access network device based on the location information of the terminal, area information of the terminal; and
sending, by the access network device, the area information of the terminal to the core network device.

According to a fourth aspect, an apparatus for reporting location information is provided, applied to a terminal, where the apparatus includes:
a first obtaining module, configured to obtain first information; and
a first sending module, configured to send location information of the terminal to a core network device based on the first information; where
the location information of the terminal is included in a first NAS message.

According to a fifth aspect, an apparatus for receiving location information is provided, applied to a core network device, where the apparatus includes:
a first receiving module, configured to receive location information of a terminal from the terminal; where
the location information of the terminal is included in a first NAS message.

According to a sixth aspect, an apparatus for processing location information is provided, applied to an access network device, where the apparatus includes:
a sixth receiving module, configured to receive location information of a terminal from a core network device;
a second determining module, configured to determine area information of the terminal based on the location information of the terminal; and
a seventh sending module, configured to send the area information of the terminal to the core network device.

According to a seventh aspect, a terminal is provided, where the terminal includes a processor and a memory, the memory stores a program or instructions capable of running on the processor, and when the program or instructions are executed by the processor, the steps of the method according to the first aspect are implemented.

According to an eighth aspect, a terminal is provided, including a processor and a communication interface, where the processor is configured to: obtain first information; and
send location information of the terminal to a core network device based on the first information; where
the location information of the terminal is included in a first NAS message.

According to a ninth aspect, a network-side device is provided, where the network-side device includes a processor and a memory, the memory stores a program or instructions capable of running on the processor, and when the program or instructions are executed by the processor, the steps of the method according to the second aspect are implemented, or the steps of the method according to the third aspect are implemented.

According to a tenth aspect, a network-side device is provided, including a processor and a communication interface; where
when the network-side device is a core network device, the communication interface is configured to receive location information of a terminal from the terminal; where
the location information of the terminal is included in a first NAS message; and
when the network-side device is an access network device, the communication interface is configured to receive location information of a terminal from a core network device;
the processor is configured to determine area information of the terminal based on the location information of the terminal; and
the communication interface is configured to send the area information of the terminal to the core network device.

According to an eleventh aspect, a readable storage medium is provided, where the readable storage medium stores a program or instructions, and when the program or instructions are executed by a processor, the steps of the method according to the first aspect are implemented, the steps of the method according to the second aspect are implemented, or the steps of the method according to the third aspect are implemented.

According to a twelfth aspect, a wireless communication system is provided, including a terminal, an access network device, and a core network device, where the terminal may be configured to perform the steps of the method according to the first aspect, the core network device may be configured to perform the steps of the method according to the second aspect, and the access network device may be configured to perform the steps of the method according to the third aspect.

According to a thirteenth aspect, a chip is provided, where the chip includes a processor and a communication interface, the communication interface is coupled to the processor, and the processor is configured to run a program or instructions to implement the method according to the first aspect, implement the method according to the second aspect, or implement the method according to the third aspect.

According to a fourteenth aspect, a computer program/program product is provided, where the computer program/program product is stored in a storage medium, and the computer program/program product is executed by at least one processor so as to implement the method according to the first aspect, implement the method according to the second aspect, or implement the method according to the third aspect.

In the embodiments of this application, a terminal reports location information of the terminal to a core network through a NAS message. In this way, in a case that AS security is not used or AS security is not activated, the location information of the terminal can still be reported through the NAS message, assisting the network side in performing processing such as mobility management or UE location verification.

### BRIEF DESCRIPTION OF DRAWINGS

FIG. 1a is a block diagram of a wireless communication system to which the embodiments of this application may be applicable.
FIG. 1b is a schematic diagram of a non-terrestrial network architecture based on transparent forwarding.
FIG. 2 is a schematic flowchart of a method for reporting location information according to an embodiment of this application.
FIG. 3 is a schematic flowchart of a method for receiving location information according to an embodiment of this application.
FIG. 4 is a schematic flowchart of a method for processing location information according to an embodiment of this application.
FIG. 5a is a first schematic flowchart of an embodiment according to the embodiments of this application.
FIG. 5b is a second schematic flowchart of an embodiment according to the embodiments of this application.
FIG. 5c is a third schematic flowchart of an embodiment according to the embodiments of this application.
FIG. 5d is a fourth schematic flowchart of an embodiment according to the embodiments of this application.
FIG. 5e is a fifth schematic flowchart of an embodiment according to the embodiments of this application.
FIG. 5f is a sixth schematic flowchart of an embodiment according to the embodiments of this application.
FIG. 5g is a seventh schematic flowchart of an embodiment according to the embodiments of this application.
FIG. 5h is an eighth schematic flowchart of an embodiment according to the embodiments of this application.
FIG. 6 is a schematic structural diagram of an apparatus for reporting location information according to an embodiment of this application.
FIG. 7 is a schematic structural diagram of an apparatus for receiving location information according to an embodiment of this application.
FIG. 8 is a schematic structural diagram of an apparatus for processing location information according to an embodiment of this application.
FIG. 9 is a schematic structural diagram of a communication device according to an embodiment of this application.
FIG. 10 is a schematic structural diagram of a terminal according to an embodiment of this application.
FIG. 11 is a first schematic structural diagram of a network-side device according to an embodiment of this application.
FIG. 12 is a second schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, "or" in this application indicates at least one of the connected objects. For example, "A or B" covers three scenarios, namely, scenario one: including A but not including B; scenario two: including B but not including A; and scenario three: including both A and B. The character "/" generally indicates an "or" relationship between the contextually associated objects.

The term "indicate" in this application may be either a direct indication (or explicit indication) or an indirect indication (or implicit indication). The direct indication may be understood as that a sender explicitly informs a receiver of content such as specific information, an operation to be executed, or a result of a request in a sent indication. The indirect indication may be understood as that a receiver determines corresponding information based on an indication sent by a sender, performs judgment and determines an operation to be executed or a result of a request based on the judgment result, or the like.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, the new radio (New Radio, NR) system is described for an illustration purpose, and NR terms are used in most of the following descriptions, although these technologies may also be used in systems other than the NR system, for example, the 6th generation (6th Generation, 6G) communication system.

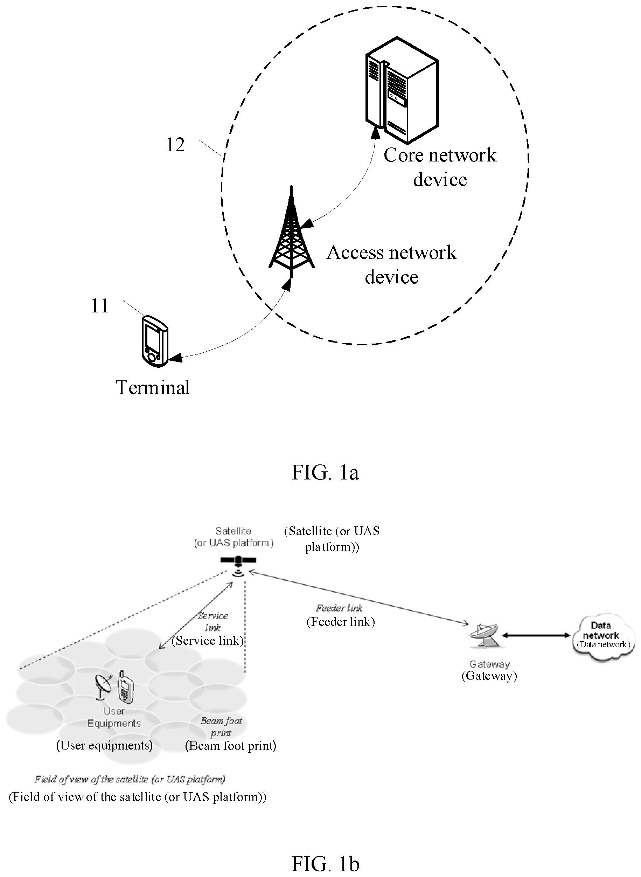

FIG. 1a is a block diagram of a wireless communication system to which the embodiments of this application may be applicable. The wireless communication system includes a terminal 11 and a network device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), a smart home device (a wireless communication-enabled home device such as a refrigerator, television, washing machine, or furniture), a game console, a personal computer (Personal Computer, PC), a teller machine, or a self-service machine. Wearable devices include smartwatches, smart bands, smart earphones, smart glasses, smart jewelry (smart bangles, smart bracelets, smart rings, smart necklaces, smart foot bangles, smart anklets, and the like), smart wristbands, and smart clothing. The vehicle user equipment may also be referred to as an in-vehicle terminal, an in-vehicle controller, an in-vehicle module, an in-vehicle component, an in-vehicle chip, an in-vehicle unit, or the like. It should be noted that the terminal 11 is not limited to a specific type in the embodiments of this application. The network device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved node B (Evolved Node B, eNB), a next-generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved Node B (home evolved Node B), a transmission reception point (Transmission Reception Point, TRP), or other appropriate terms in the art. Provided that the same technical effects are achieved, the base station is not limited to any particular technical terms. It should be noted that in the embodiments of this application, only the base station in the NR system is used as an example, but the base station is not limited in type.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), and an application function (Application Function, AF). It should be noted that in the embodiments of this application, only the core network device in the NR system is introduced as an example, and the specific type of the core network device is not limited.

To better understand the technical solutions of this application, the following content is first introduced.

### Introduction to NTN

A non-terrestrial network refers to a network or network segment that uses satellite or unmanned aircraft system (Unmanned Aircraft System, UAS) platforms for transmission. Compared with terrestrial communication systems, satellite-based non-terrestrial communication systems have a wider coverage, for which typical applicable scenarios include situations in which terrestrial base stations cannot be built or terrestrial base stations are damaged, such as continuous coverage in remote mountains, deserts, oceans, forests, or emergency communications when terrestrial base stations are damaged due to natural disasters.

Satellites include low earth orbiting (Low Earth Orbiting, LEO) satellites, medium earth orbiting (Medium Earth Orbiting, MEO) satellites, geostationary earth orbiting (Geostationary Earth Orbiting, GEO) satellites, and highly elliptical orbiting (Highly Elliptical Orbiting, HEO) satellites.

Typical scenarios for non-terrestrial networks include transparent forwarding, where a satellite serves as a forwarding relay. As shown in FIG. 1b, the link between the satellite and the terminal is a service link, and the link between the satellite and the terrestrial base station is a feeder link.

### Coarse UE location reporting (Coarse UE location reporting)

The 3rd generation partnership project (3rd Generation Partnership Project, 3GPP) supports bandwidth reduced low complexity (Bandwidth reduced Low complexity, BL) UE, UE in coverage enhancement (UE in Coverage Enhancement, UE in CE), and narrow band internet of things (Narrow Band Internet of Things, NB-IoT) UE accessing an NTN, where BL UE and UE in enhanced coverage (UE in enhanced coverage) are collectively referred to as enhanced machine-type communication (enhanced Machine-Type Communication, eMTC) terminals.

When a terminal accesses networks through a cell, a radio access network determines a tracking area where the terminal is located based on the selected network information reported by the terminal, and informs a core network of this information to facilitate mobility management by the core network. In satellite communication systems, a cell provides multiple tracking area codes (Tracking Area Codes, TACs) for each network supported by the cell. When the terminal accesses the networks through the cell, the radio access network cannot determine the tracking area where the terminal is located, and thus cannot provide accurate tracking area information to the core network, which is not conducive to mobility management by the core network. Therefore, the terminal reporting location information to the radio access network is introduced, so that an evolved universal mobile telecommunications system terrestrial radio access network (Evolved Universal Mobile Telecommunications System Terrestrial Radio Access Network, E-UTRAN) determines, based on the location information reported by the terminal, the tracking area (Tracking area, TA) where the terminal is located and mapped cell identity (Mapped Cell ID), and indicates this information to the core network to facilitate mobility management by the core network.

For eMTC terminals, coarse UE location reporting is supported. A terminal can report a location of the terminal in the following two ways:

Measurement reporting (Measurement reporting): If a measurement report is triggered for the terminal, and coarseLocationReq is configured in the reporting configuration corresponding to the measurement ID of the measurement report, the terminal includes coarseLocationInfo in the measurement report.

UE information procedure (UE information procedure): If a UEInformationRequest message received by the terminal includes coarseLocationReq, the terminal includes coarseLocationInfo in a UEInformationResponse message.

In an NTN, it is crucial for the network side to obtain location information of a terminal, for example, this helps the network perform mobility management. Sending location information through RRC signaling requires AS security, while for NB-IoT devices with support for control plane (Control Plane, CP) cellular internet of things (Cellular Internet of Things, CIoT) EPS optimization only (NB-IoT devices with support for CP CIoT EPS Optimization only), AS security is absent. Therefore, considering user privacy concerns, the current mechanism of a terminal reporting location information is applicable to only eMTC UE and not applicable to NB-IoT UE. In addition, allowing the network side to obtain the location information of the terminal as early as possible (for example, during initial connection establishment) is also helpful for the network side to determine whether to provide services for the terminal. However, before the initial connection establishment is completed, AS security is not activated, so reporting location information before the initial connection establishment is completed is currently not supported.

Therefore, how to support a terminal in reporting location information in the absence of AS security is a problem that needs to be solved. It should be noted that for the problem of how a terminal reports location information in the absence of AS security, a specific type of the terminal is not limited, and the problem needs to be solved for all existing terminal types.

The following describes in detail the method provided in the embodiments of this application through some embodiments and application scenarios thereof with reference to the accompanying drawings.

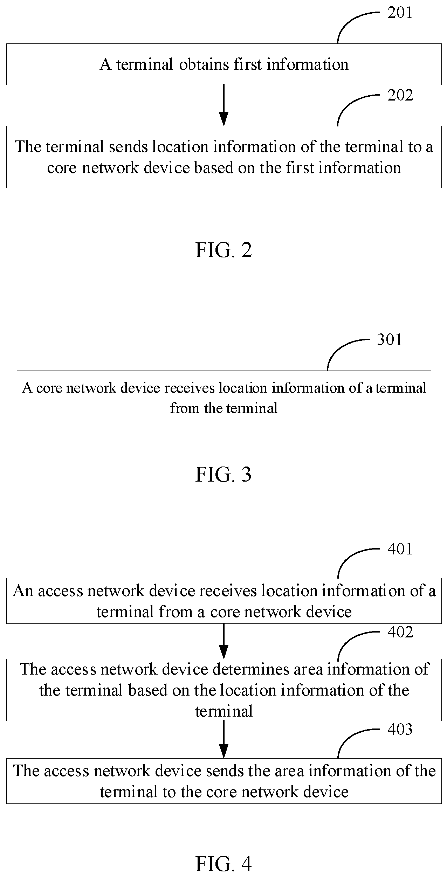

Referring to FIG. 2, an embodiment of this application provides a method for reporting location information. The method is performed by a terminal. The method includes the following steps.

Step 201: The terminal obtains first information.

Step 202: The terminal sends location information of the terminal to a core network device based on the first information.

The location information of the terminal is included in a first non-access stratum (Non-Access Stratum, NAS) message.

The first information may be indication information received by the terminal, used to instruct the terminal to report the location information, the first information may be capability information of the terminal itself, used to determine that the terminal has a capability of reporting the location information, or the first information may be type information of the terminal itself, used to determine a type of the terminal.

The location information of the terminal may specifically be global navigation satellite system (Global Navigation Satellite System, GNSS) location information.

Optionally, the location information of the terminal includes at least one of the following types:
(1) GNSS location, such as longitude and latitude;
(2) GNSS location with specified accuracy, such as coarse-grained longitude and latitude;
(3) address information (such as a specific street, a specific building, or a specific square); and
(4) other information capable of expressing the geographical location of the terminal.

In this embodiment of this application, the terminal reports the location information of the terminal to the core network through the NAS message. In this way, in a case that AS security is not used or AS security is not activated, the location information of the terminal can still be reported through the NAS message, assisting the network side in performing processing such as mobility management or UE location verification.

In a possible implementation, the first information includes at least one of the following:
(1) first indication information, where the first indication information is used to instruct the terminal to report the location information of the terminal, and the first indication information is received by the terminal from the core network device through a second NAS message; that is, when the core network device instructs, through the second NAS message, the terminal to report the location information, the terminal reports the location information through the first NAS message; and optionally, the first indication information may also indicate the accuracy of the location information reported by the terminal, such as coarse granularity or fine granularity;
(2) first capability information, where the first capability information is used to indicate that the terminal supports a capability of reporting the location information of the terminal through a NAS message; that is, when the terminal has the capability of reporting the location information through a NAS message (at this time, no indication from the core network is needed), the terminal reports the location information through the first NAS message; and
(3) first terminal type information, where the first terminal type information is used to indicate that the type of the terminal is NB-IoT terminal; that is, when the terminal is specifically an NB-IoT terminal (at this time, no indication from the core network is needed), the terminal reports the location information through the first NAS message.

It is clarified from the foregoing (1) to (3) under what circumstances the terminal can report the location information to the core network through a NAS message.

In a possible implementation, the first NAS message includes any one of the following:
(1) an attach complete (attach complete) message;
(2) a registration complete (registration complete) message;
(3) a service request (service request) message;
(4) a packet data network connection (Packet Data Network Connection, PDN) establishment request message;
(5) a protocol data unit (Protocol Data Unit, PDU) session establishment request message; and
(6) a dedicated NAS message for reporting the location information of the terminal, that is, constructing a new NAS message dedicated to reporting the location information of the terminal.

The location information of the terminal is carried in the interaction messages of the foregoing (1) to (6), so that the reporting of the location information is completed in the interaction process corresponding to the foregoing messages.

In a possible implementation, the second NAS message includes any one of the following:
(1) an attach accept (attach accept) message;
(2) a registration accept (registration accept) message; and
(3) a dedicated NAS message for instructing the terminal to report location information, that is, constructing a new NAS message dedicated to instructing the terminal to report location information.

The indication information for instructing the terminal to report the location information of the terminal is carried in the interaction messages of the foregoing (1) to (3), so that the instructing for the terminal to report the location information of the terminal is completed in the interaction process corresponding to the foregoing messages.

In a possible implementation, in a case that the first information is the first indication information, that the terminal sends the first NAS message to the core network device based on the first information includes the following steps:
(1) after receiving the first indication information, the terminal determines whether to agree to report the location information of the terminal, whether the location information of the terminal is valid, or whether the terminal supports the capability of reporting the location information of the terminal through a NAS message; and
(2) in a case of determining that a user of the terminal agrees to report the location information of the terminal, that the location information of the terminal is valid, or that the terminal supports the capability of reporting the location information of the terminal through a NAS message, the terminal sends the location information of the terminal to the core network device.

In this embodiment of this application, after the terminal receives the indication information sent by the core network for instructing the terminal to report the location information of the terminal, the terminal needs to first determine whether its user agrees to report the location information, whether its location information is valid, or whether the terminal supports the capability of reporting the location information of the terminal through a NAS message, and in a case of determining that the user agrees to report the location information of the terminal or that the location information of the terminal is valid, the terminal reports the location information through the first NAS message.

In a possible implementation, that after receiving the first indication information, the terminal determines whether to agree to report the location information of the terminal or whether the location information of the terminal is valid includes the following step:
after receiving the first indication information, the terminal determines at least one of the following based on second information:
   (1) whether to agree to report the location information of the terminal;
   (2) whether the location information of the terminal is valid; and
   (3) whether the terminal supports the capability of reporting the location information of the terminal through a NAS message; where
the second information is used to indicate whether the user of the terminal agrees to report the location information of the terminal, indicate validity of the location information of the terminal, or indicate whether the terminal supports the capability of reporting the location information of the terminal through a NAS message.

In a possible implementation, the method further includes the following step:
in a case that the second information indicates that the user of the terminal does not agree to report the location information of the terminal, indicates that the location information of the terminal is invalid, or indicates that the terminal does not support the capability of reporting the location information of the terminal through a NAS message, the terminal sends second indication information to the core network device; where
the second indication information is used to indicate that the terminal does not report the location information of the terminal or refuses to report the location information of the terminal.

When the user of the terminal does not agree to report the location information, the current location information is unavailable or invalid, or the terminal does not support the capability of reporting the location information of the terminal through a NAS message, the terminal does not send the location information of the UE, and the terminal may send indication information to the core network for instructing the terminal not to report the location information of the terminal.

In a possible implementation, the second information is carried in the first NAS message.

Optionally, the second indication information may further include the reason why the terminal does not report the location information, such as privacy issues, invalid location, or unavailable location.

In a possible implementation, the method further includes the following step:
the terminal sends a first request message to the core network device, where the first request message includes the first capability information or second capability information; where
the second capability information is used to indicate that the terminal does not support the capability of reporting the location information of the terminal through a NAS message, and the first request message is used to request attachment or request registration.

The terminal may send the information indicating that it supports or does not support the capability of reporting the location information of the terminal through a NAS message to the core network through a request message in the attachment/registration request phase, and the core network may decide whether to send the first NAS message to instruct the terminal to report the location information based on the capability of the terminal.

Referring to FIG. 3, an embodiment of this application provides a method for receiving location information. The method is performed by a core network device, such as an MME or AMF. A type of the core network device is not limited in this embodiment of this application. The method includes the following step:
Step 301: The core network device receives location information of a terminal from the terminal.

The location information of the terminal is included in a first NAS message.

Optionally, the core network device receiving the location information of the terminal through the first NAS message may be executed after the core network instructs the terminal to report the location information through a NAS message, or the core network device does not instruct the terminal, and the terminal actively reports, based on its own capability or type, the location information to the core network device.

In a possible implementation, before the core network device receives the location information of the terminal from the terminal, the method further includes the following step:
the core network device sends first indication information to the terminal; where
the first indication information is included in a second NAS message, and the first indication information is used to instruct the terminal to report the location information of the terminal.

The core network instructs, through the second NAS message, the terminal to report the location information, and after receiving the indication, the terminal reports the location information to the core network device through the first NAS message.

In a possible implementation, before the core network device receives the location information of the terminal from the terminal, the method further includes the following step:
the core network device receives first capability information from the terminal, where the first capability information is used to indicate that the terminal supports a capability of reporting the location information of the terminal through a NAS message.

In a possible implementation, the first capability information is carried in at least one of the following messages:
(1) an attach request message;
(2) a registration request message; and
(3) a dedicated NAS message for sending the first capability information, that is, constructing a new NAS message dedicated to reporting the first capability information.

The first capability information is carried in the interaction messages of the foregoing (1) to (3), so that the reporting of the first capability information is completed in the interaction process corresponding to the foregoing messages.

In a possible implementation, the method further includes the following step:
the core network device sends the first indication information to the terminal based on at least one of the following:
(1) the first capability information, where the first capability information is used to indicate that the terminal supports the capability of reporting the location information of the terminal through a NAS message; and
(2) an access type of the terminal, where the access type of the terminal includes NB-IoT.

In a possible implementation, the first NAS message includes any one of the following:
(1) an attach complete (attach complete) message;
(2) a registration complete (registration complete) message;
(3) a service request (service request) message;
(4) a PDN establishment request message;
(5) a PDU session establishment request message; and
(6) a dedicated NAS message for reporting the location information of the terminal, that is, constructing a new NAS message dedicated to reporting the location information of the terminal.

The location information of the terminal is carried in the interaction messages of the foregoing (1) to (6), so that the reporting of the location information is completed in the interaction process corresponding to the foregoing messages.

In a possible implementation, the second NAS message includes any one of the following:
(1) an attach accept (attach accept) message;
(2) a registration accept (registration accept) message; and
(3) a dedicated NAS message for instructing the terminal to report the location information, that is, constructing a new NAS message dedicated to instructing the terminal to report the location information.

The indication information for instructing the terminal to report the location information of the terminal is carried in the interaction messages of the foregoing (1) to (3), so that the instructing for the terminal to report the location information of the terminal is completed in the interaction process corresponding to the foregoing messages.

In a possible implementation, after the core network device sends the second NAS message to the terminal, the method further includes the following step:
the core network device receives second indication information from the terminal; where
the second indication information is used to indicate that the terminal does not report the location information of the terminal.

The terminal side determines, based on whether its own user agrees or whether the current location information is valid, whether to report the location information, and when determining not to report the location information, the terminal indicates to the core network device that the terminal does not report the location information of the terminal.

In a possible implementation, the method further includes the following step:
the core network device determines, based on a mapping relationship between the location information and preconfigured area information of the terminal, the area information of the terminal.

In a case that the core network device receives the location information of the terminal, the core network device may determine the area information of the terminal based on the mapping relationship between the location information and preconfigured area information of the terminal.

The area information of the terminal may include at least one of the following:
(1) a tracking area code (Tracking Area Code, TAC) or tracking area identity (Tracking Area Identity, TAI) corresponding to the location where the terminal is located;
(2) a mapped cell ID (Mapped Cell ID) corresponding to the location where the terminal is located, that is, the cell ID corresponding to a fixed terrestrial area; and
(3) a cell global identity (Cell Global Identity, CGI) corresponding to the location where the terminal is located.

The mapping relationship may include at least one of the following:
(1) a mapping relationship between the mapped cell ID and geographical area;
(2) a mapping relationship between the TAC and geographical area;
(3) a mapping relationship between the TAI and geographical area; and
(4) a mapping relationship between the CGI and geographical area.

The mapping relationship may be preconfigured (for example, depending on an operator policy), or may be configured based on implementation.

In a possible implementation, the method further includes the following steps:
(1) the core network device sends the location information of the terminal to an access network device; and
(2) the core network device receives area information of the terminal from the access network device.

The core network device sends the location information of the terminal to the access network device, the access network device determines the area information of the terminal, and then the access network device sends the area information of the terminal to the core network device.

In a possible implementation, that the core network device sends the location information of the terminal to the access network device includes the following steps:
(1) the core network device receives third information from the access network device, where the third information is used to indicate whether the access network device supports receiving or processing the location information of the terminal; and
(2) in a case that the third information is used to indicate that the access network device supports receiving or processing the location information of the terminal, the core network device sends the location information of the terminal to the access network device.

The access network device may indicate, to the core network device, whether it supports receiving or processing the location information of the terminal, and when the access network device supports receiving or processing the location information of the terminal, the core network device sends the location information of the terminal to the access network device.

In a possible implementation, the method further includes the following step:
in a case that the core network device receives the second indication information from the terminal or that the third information is used to indicate that the access network device does not support receiving or processing the location information of the terminal, the core network device performs at least one of the following:
(1) obtaining the location information of the terminal through a NAS process of the terminal or a positioning process of the terminal;
(2) rejecting a NAS request procedure of the terminal, which may specifically include rejecting a registration request, an attachment request, a PDN establishment request, a PDU session establishment request, a service request, or the like of the terminal;
(3) detaching the terminal; and
(4) deregistering the terminal.

For the foregoing case of the terminal not reporting the location information to the core network device or the access network device not supporting receiving or processing the location information of the terminal, that is, when the core network cannot obtain the location information of the terminal in the manners described above, the core network device executes a positioning procedure of the terminal to obtain the location information of the UE, or the core network device continues to execute subsequent NAS processes, and obtains the location information of the UE through the RAN after subsequent establishment of security in the AS layer.

In a possible implementation, the method further includes the following step:
(1) in a case of determining, based on the area information of the terminal, that a current area where the terminal is located does not allow performing of communication in a current public land mobile network (Public Land Mobile Network, PLMN), the core network device performs rejection and release procedures of a NAS request; or
(2) in a case of determining, based on the area information of the terminal, that a current area where the terminal is located allows performing of communication in a current PLMN, the core network device performs a processing procedure of a NAS request.

The core network device performs, based on the obtained area information of the terminal, a location verification procedure of the terminal and a NAS processing operation after location verification according to regulatory requirements.

Referring to FIG. 4, an embodiment of this application provides a method for processing location information. The method is performed by an access network device, such as an eNB or gNB. A type of the access network device is not limited in this embodiment of this application. The method includes the following steps:
Step 401: The access network device receives location information of a terminal from a core network device.
Step 402: The access network device determines area information of the terminal based on the location information of the terminal.
Step 403: The access network device sends the area information of the terminal to the core network device.

The core network device sends the location information of the terminal to the access network device, the access network device determines the area information of the terminal, and then the access network device sends the area information of the terminal to the core network device.

In a possible implementation, that the access network device receives the location information of the terminal from the core network device includes the following steps:
(1) the access network device sends third information to the core network device, where the third information is used to indicate whether the access network device supports receiving or processing the location information of the terminal; and
(2) in a case that the third information is used to indicate that the access network device supports receiving or processing the location information of the terminal, the access network device receives the location information of the terminal from the core network device.

The access network device may indicate, to the core network device, whether it supports receiving or processing the location information of the terminal, and when the access network device supports receiving or processing the location information of the terminal, the core network device sends the location information of the terminal to the access network device.

The following describes the technical solutions of this application with reference to specific embodiments. It should be noted that in the following embodiments, the access network device serving as an eNB/gNB and the core network device serving as an MME/AMF are used as an example for description.

Embodiment 1: UE performs UE location reporting based on first information.

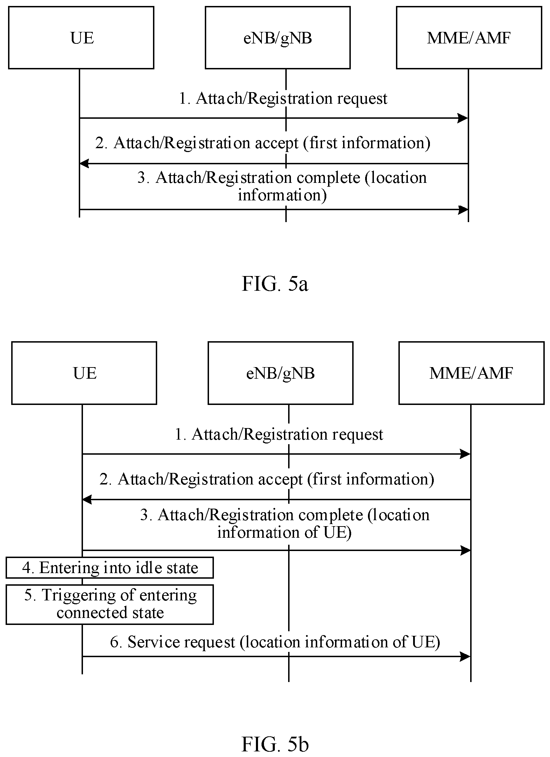

Referring to FIG. 5a, one implementation is that the first information is location reporting indication information sent by the core network.
1. The UE sends an attach request (attach request) or a registration request (registration request) to the MME/AMF.
2. The MME/AMF has the first information carried in an attach accept or registration accept message, where the first information instructs the UE to report location information of the UE, the first information may also indicate the accuracy of the location information of the UE reported by the UE, such as coarse granularity or fine granularity, and the location information of the UE includes at least one of the following types:
   GNSS location, such as longitude and latitude;
   GNSS location with specified accuracy, such as coarse-grained longitude and latitude;
   address information (such as a specific street, a specific building, or a specific square); and
   other information capable of expressing the geographical location of the UE; and
   the first information also includes an indication for the UE to have the location information of the UE carried in subsequent NAS messages.
3. The UE receives the registration accept/attach accept message, and based on the indication of the first information for the UE to report the location information of the UE, sends the location information of the UE to the MME/AMF, where the specific information of the location information of the UE may also be determined based on the accuracy indication of the first information.

Referring to FIG. 5b, one implementation is that after the UE obtains the first information sent by the network, the UE has location information of the UE carried in subsequent NAS messages.

One implementation is that in the subsequent service request procedure of the UE, based on the first information received earlier, the UE sends the location information of the UE to the MME/AMF.

Steps 1 to 3 are the same as those in FIG. 5a.

Steps 4 and 5: The UE enters a connected state from an idle state.

Step 6: The UE has the location information of the UE carried in the service request message based on the first information of the network (instructing the UE to report the location information of the UE).

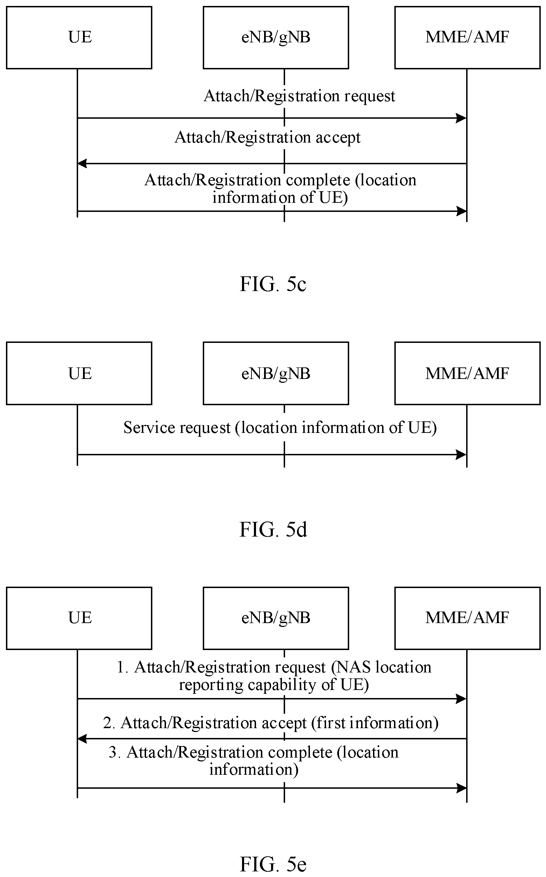

Referring to FIG. 5c, one implementation is that the first information is the NAS location reporting capability of the UE and/or the type of the UE includes NB-IoT device (device), eMTC device, or the like. This implementation does not depend on whether the UE has received the UE location reporting indication from the network. The UE reports location information thereof through a NAS message provided that the UE is of a type such as NB-IoT device or eMTC device, or the UE has the capability to perform UE location reporting through a NAS message.

One implementation is that the UE has the location information of the UE carried in the attach or registration complete message to the MME/AMF.

As shown in FIG. 5c, the UE determines that it has the NAS location reporting capability or is UE of the type such as NB-IoT device, and the UE reports the location information of the UE to the core network (MME/AMF). One implementation is that the UE has the location information of the UE carried in the attach or registration complete message to the MME/AMF, and the location information of the UE includes:
GNSS location information;
address information; and
other information capable of representing the location of the UE.

Referring to FIG. 5d, another implementation is that the UE has the location information of the UE carried in a service request message.

When the UE enters a connected state from an idle (idle) state, the UE has the location information of the UE carried in the service request message.

The location information of the UE includes:
GNSS location information;
address information; and
other information capable of representing the location of the UE.

Embodiment 2: The core network sends first information based on a NAS location reporting capability of the UE.

Refer to FIG. 5e.
1. The UE has the capability information of the UE to report UE location through NAS carried in a registration/attach request.
2. The MME/AMF determines, based on the capability information of the UE to report UE location through NAS sent by the UE, to send the first information, same as Embodiment 1, including:
   (a) the UE supports the capability of reporting UE location through NAS, and the MME/AMF sends the first information to the UE; and
   (b) the UE does not support the capability of reporting UE location through NAS, and the MME/AMF does not send the first information to the UE; where the AMF/MME executes a positioning procedure including the UE to obtain the location information of the UE, or the AMF/MME continues to execute subsequent NAS processes, and obtains the location information of the UE through the RAN after subsequent establishment of security in the AS layer.
3. The UE sends the location information of the UE to the MME/AMF.

Embodiment 3: The core network processes of location of UE.

One implementation is that the core network determines area information of the UE based on location information of the UE and a first mapping relationship, where the area information of the terminal includes:
a TAC/TAI where the terminal is located;
a mapped cell ID (Mapped Cell ID) where the terminal is located, that is, cell ID corresponding to a fixed terrestrial area; and
a CGI where the terminal is located.

The first mapping relationship includes at least one of the following:
a mapping relationship between the mapped cell ID and geographical area;
a mapping relationship between the TAC and geographical area;
a mapping relationship between the TAI and geographical area; and
a mapping relationship between the CGI and geographical area;

The first mapping relationship may be preconfigured (for example, depending on an operator policy), or may be configured based on implementation.

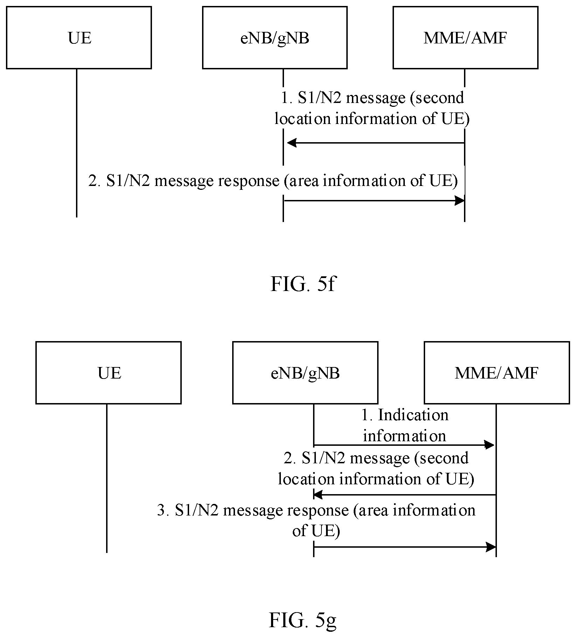

Referring to FIG. 5f, one implementation is that without the location information of the UE and the first mapping relationship configured, the MME/AMF sends second location information of the UE to the RAN (eNB/gNB) through an S1/N2 message, used to request the RAN to return area information of the UE. The RAN determines the area information of the UE based on the second location information of the UE, and the RAN returns the area information of the UE.
1. The MME/AMF sends the second location information of the UE through the S1/N2 message, used to request the RAN to return the area information of the UE. The second location information of the UE is determined based on the location information of the UE reported by the UE, including at least one of the following:
   (a) GNSS location information;
   (b) address information; and
   (c) other information capable of representing the location of the UE.
2. The RAN receives the second location information of the UE and sends the area information of the UE to the MME/AMF, where the area information of the UE includes at least one of the following:
   (a) a TAC/TAI where the terminal is located;
   (b) a mapped cell ID (Mapped Cell ID) where the terminal is located, that is, cell ID corresponding to a fixed terrestrial area; and
   (c) a CGI where the terminal is located.

Referring to FIG. 5g, another implementation is that the MME/AMF sends second location information of the UE to the RAN based on an indication of the capability of the RAN to receive and/or process the location information of the UE.
1. The RAN sends indication information, where the indication information is used to indicate the capability information of the RAN to receive and/or process the location information of the UE, and the indication information may be carried in an NG set up request.
2. Based on the capability of the RAN to receive and/or process the location information of the UE, the MME/AMF sends the second location information of the UE to the RAN, used to request the area information of the UE; where
   (a) if the RAN supports receiving and/or processing the location information of the UE, the MME/AMF sends the second location information of the UE to the RAN; or
   (b) if the RAN does not support receiving and/or processing the location information of the UE, the MME/AMF does not send the second location information of the UE to the RAN; and the AMF/MME further performs a positioning procedure of the UE to obtain the location information of the UE, or the AMF/MME continues to perform subsequent NAS processes, and obtains the location information of the UE through the RAN after subsequent establishment of security in the AS layer.
3. The RAN generates the area information of the UE based on the second location information of the UE, and sends the area information to the AMF/MME.

Embodiment 4: Operations of the core network after obtaining area information of the UE.

Based on the area information of the UE obtained in Embodiments 2 and 3, the MME/AMF performs a location verification procedure of the UE and a NAS processing operation after location verification according to regulatory requirements, including:
if the current area location of the UE does not allow performing of communication in a current PLMN, performing rejection and release procedures of a NAS request; or
if the current area location of the UE allows performing of communication in a current PLMN, performing a subsequent NAS request.

Embodiment 5: The UE further determines, based on second information, whether to report location information of the UE, and notifies the network side.

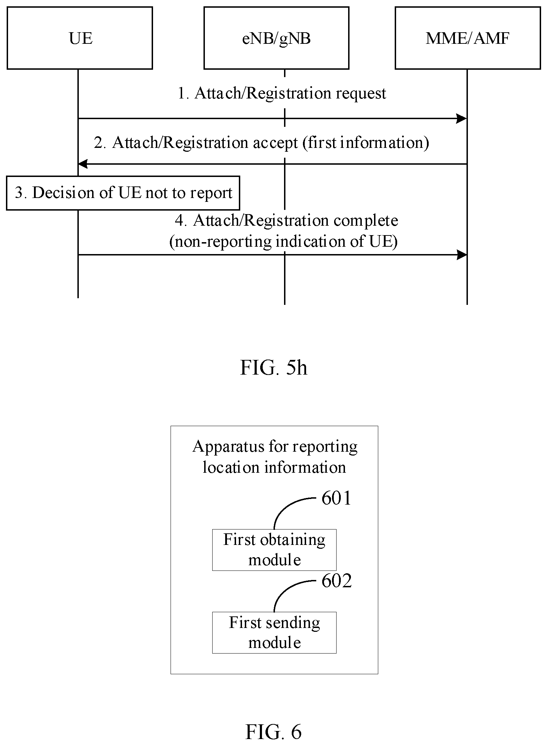

Refer to FIG. 5h.

Steps 1 and 2 are the same as those in Embodiment 1.

Step 3: The UE further determines to report location information of the UE based on second information, where the second information includes at least one of the following:
whether a user of the UE agrees to report the location information of the UE; and
whether the current location information of the UE is available or valid.

One implementation is that when the user of the UE agrees to report the location information of the UE, the location information of the UE is reported, and the location information of the UE is sent in step 4.

One implementation is that when the current location information of the UE is valid or available, the location information of the UE is reported, and the location information of the UE is sent in step 4.

One implementation is that when the user of the UE does not agree to report the location information of the UE, or the current location information of the UE is unavailable or invalid, in step 4, the location information of the UE is not sent and/or indication information of not reporting UE location is sent, and the reason for not reporting the UE location is also included, including at least one of the following:
such as UE privacy issues and UE location being unavailable.

After step 4, further, after the MME/AMF receives the indication information of not reporting UE location from the UE, the MME/AMF performs operations including:
continuing to perform subsequent NAS processes; and
initiating a positioning procedure of the UE.

Referring to FIG. 6, an embodiment of this application provides an apparatus for reporting location information, applied to a terminal. The apparatus includes:
a first obtaining module 601, configured to obtain first information; and
a first sending module 602, configured to send location information of the terminal to a core network device based on the first information; where
the location information of the terminal is included in a first NAS message.

Optionally, the first information includes at least one of the following:
first indication information, where the first indication information is used to instruct the terminal to report the location information of the terminal, and the first indication information is received by the terminal from the core network device through a second NAS message;
first capability information, where the first capability information is used to indicate that the terminal supports a capability of reporting the location information of the terminal through a NAS message; and
first terminal type information, where the first terminal type information is used to indicate that the type of the terminal is narrow band internet of things NB-IoT terminal.

Optionally, the first NAS message includes any one of the following:
an attach complete message;
a registration complete message;
a service request message;
a packet data network connection PDN establishment request message;
a protocol data unit PDU session establishment request message; and
a dedicated NAS message for reporting the location information of the terminal; and
the second NAS message includes any one of the following:
   an attach accept message;
   a registration accept message; and
   a dedicated NAS message for instructing the terminal to report the location information.

Optionally, in a case that the first information is the first indication information, the first sending module is specifically configured to:
after receiving the first indication information, determine whether to agree to report the location information of the terminal, whether the location information of the terminal is valid, or whether the terminal supports the capability of reporting the location information of the terminal through a NAS message; and
in a case of determining that a user of the terminal agrees to report the location information of the terminal, that the location information of the terminal is valid, or that the terminal supports the capability of reporting the location information of the terminal through a NAS message, send the location information of the terminal to the core network device.

Optionally, the first sending module is specifically configured to:
after receiving the first indication information, determine at least one of the following based on second information:
whether to agree to report the location information of the terminal;
whether the location information of the terminal is valid; and
whether the terminal supports the capability of reporting the location information of the terminal through a NAS message; where
the second information is used to indicate whether the user of the terminal agrees to report the location information of the terminal, indicate validity of the location information of the terminal, or indicate whether the terminal supports the capability of reporting the location information of the terminal through a NAS message.

Optionally, the apparatus further includes:
a second sending module, configured to: in a case that the second information indicates that the user of the terminal does not agree to report the location information of the terminal, indicates that the location information of the terminal is invalid, or indicates that the terminal does not support the capability of reporting the location information of the terminal through a NAS message, send second indication information to the core network device; where
the second indication information is used to indicate that the terminal does not report the location information of the terminal or refuses to report the location information of the terminal.

Optionally, the second information is carried in the first NAS message.

Optionally, the apparatus further includes:
a third sending module, configured to send a first request message to the core network device, where the first request message includes the first capability information or second capability information; where
the second capability information is used to indicate that the terminal does not support the capability of reporting the location information of the terminal through a NAS message, and the first request message is used to request attachment or request registration.

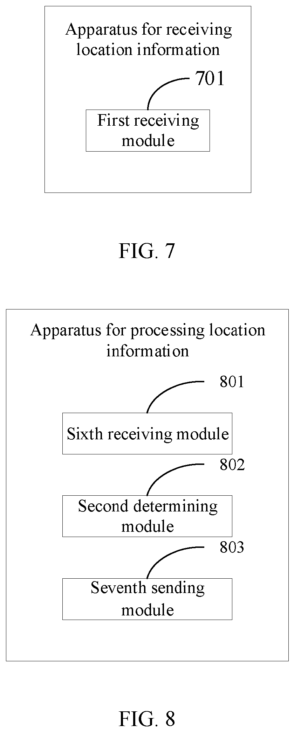

Referring to FIG. 7, an embodiment of this application provides an apparatus for receiving location information, applied to a core network device. The apparatus includes:
a first receiving module 701, configured to receive location information of a terminal from the terminal; where
the location information of the terminal is included in a first NAS message.

Optionally, the apparatus further includes:
a fourth sending module, configured to: before receiving the location information of the terminal from the terminal, send first indication information to the terminal; where
the first indication information is included in a second NAS message, and the first indication information is used to instruct the terminal to report the location information of the terminal.

Optionally, the apparatus further includes:
a second receiving module, configured to: before receiving the location information of the terminal from the terminal, receive first capability information from the terminal, where the first capability information is used to indicate that the terminal supports a capability of reporting the location information of the terminal through a NAS message.

Optionally, the first capability information is carried in at least one of the following messages:
an attach request message;
a registration request message; and
a dedicated NAS message for sending the first capability information.

Optionally, the apparatus further includes:
a fifth sending module, configured to send the first indication information to the terminal based on at least one of the following: the first capability information, where the first capability information is used to indicate that the terminal supports the capability of reporting the location information of the terminal through a NAS message; and an access type of the terminal, where the access type of the terminal includes NB-IoT.

Optionally, the first NAS message includes any one of the following:
an attach complete message;
a registration complete message;
a service request message;
a PDN establishment request message;
a PDU session establishment request message; and
a dedicated NAS message for reporting the location information of the terminal; and
the second NAS message includes any one of the following:
   an attach accept message;
   a registration accept message; and
   a dedicated NAS message carrying a second indication.

Optionally, the apparatus further includes:
a third receiving module, configured to: after sending the first indication information to the terminal, receive second indication information from the terminal; where
the second indication information is used to indicate that the terminal does not report the location information of the terminal.

Optionally, the apparatus further includes:
a first determining module, configured to determine, based on a mapping relationship between the location information and preconfigured area information of the terminal, the area information of the terminal.

Optionally, the apparatus further includes:
a sixth sending module, configured to send the location information of the terminal to an access network device; and
a fourth receiving module, configured to receive area information of the terminal from the access network device.

Optionally, the sixth sending module is specifically configured to:
receive third information from the access network device, where the third information is used to indicate whether the access network device supports receiving or processing the location information of the terminal; and
in a case that the third information is used to indicate that the access network device supports receiving or processing the location information of the terminal, send the location information of the terminal to the access network device.

Optionally, the apparatus further includes:
a fifth receiving module, configured to: in a case that the second indication information is received from the terminal or that the third information is used to indicate that the access network device does not support receiving or processing the location information of the terminal, perform at least one of the following:
obtain the location information of the terminal through a NAS process of the terminal or a positioning process of the terminal;
reject a NAS request procedure of the terminal;
detach the terminal; and
deregister the terminal.

Optionally, the apparatus further includes:
an execution module, configured to:
in a case of determining, based on the area information of the terminal, that a current area where the terminal is located does not allow performing of communication in a current PLMN, perform rejection and release procedures of a NAS request;
   or
in a case of determining, based on the area information of the terminal, that a current area where the terminal is located allows performing of communication in a current PLMN, perform a processing procedure of a NAS request.

Referring to FIG. 8, an embodiment of this application provides an apparatus for processing location information, applied to an access network device. The apparatus includes:
a sixth receiving module 801, configured to receive location information of a terminal from a core network device;
a second determining module 802, configured to determine area information of the terminal based on the location information of the terminal; and
a seventh sending module 803, configured to send the area information of the terminal to the core network device.

Optionally, the sixth receiving module is specifically configured to:
send third information to the core network device, where the third information is used to indicate whether the access network device supports receiving or processing the location information of the terminal; and
in a case that the third information is used to indicate that the access network device supports receiving or processing the location information of the terminal, receive the location information of the terminal from the core network device.

The apparatus in the embodiments of this application may be an electronic device such as an electronic device with an operating system, or a component in an electronic device such as an integrated circuit or chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

The apparatus provided in the embodiments of this application can implement the processes implemented in the method embodiments in FIGS. 2 to 5h, with the same technical effects achieved. To avoid repetition, details are not described herein again.

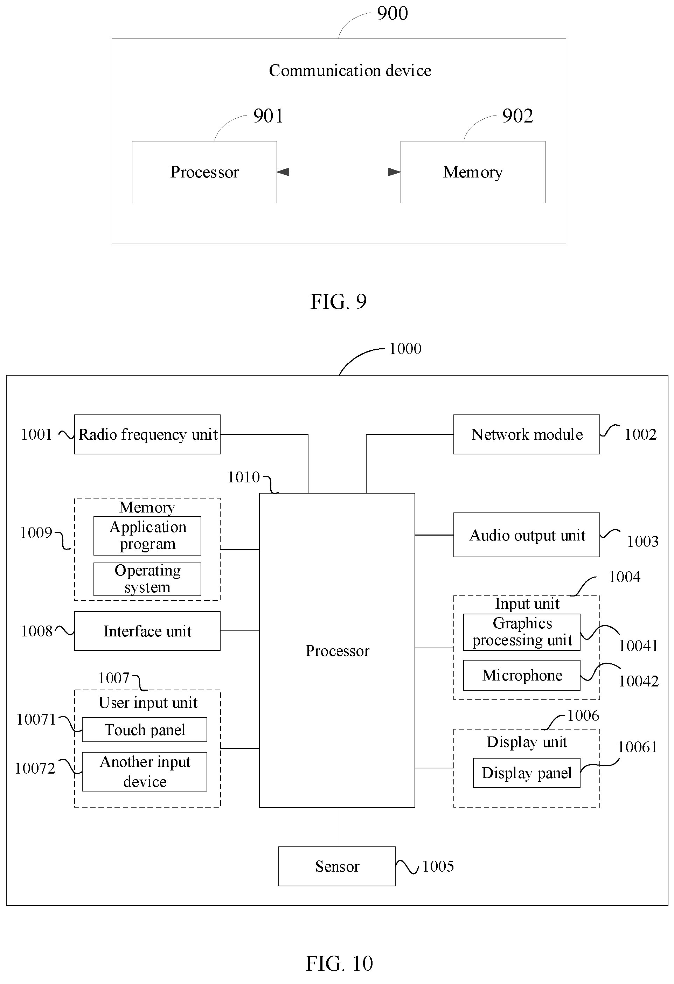

As shown in FIG. 9, an embodiment of this application further provides a communication device 900 including a processor 901 and a memory 902, where the memory 902 stores a program or instructions capable of running on the processor 901. For example, in a case that the communication device 900 is a terminal, and when the program or instructions are executed by the processor 901, the steps of the foregoing method embodiments are implemented, with the same technical effects achieved. In a case that the communication device 900 is a network-side device, and when the program or instructions are executed by the processor 901, the steps of the foregoing method embodiments are implemented, with the same technical effects achieved. To avoid repetition, details are not described herein again.

An embodiment of this application further provides a terminal including a processor and a communication interface. The communication interface is coupled to the processor, and the processor is configured to run a program or instructions to implement the steps in the foregoing terminal-side method embodiments. This terminal embodiment corresponds to the foregoing method embodiment on the terminal side. All processes and implementations in the foregoing method embodiment are applicable to this terminal embodiment, with the same technical effects achieved. Specifically, FIG. 10 is a schematic diagram of a hardware structure of a terminal implementing the embodiments of this application.

A terminal 1000 includes but is not limited to at least part of these components: a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

It can be understood by persons skilled in the art that the terminal 1000 may further include a power supply (for example, battery) supplying power to the components. The power supply may be logically connected to the processor 1010 via a power management system, so that functions such as charge management, discharge management, and power consumption management are implemented via the power management system. The structure of the terminal shown in FIG. 10 does not constitute any limitation on the terminal, and the terminal may include more or fewer components than shown in the figure, or combine some of the components, or have different arrangements of the components. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or video obtained by an image capture apparatus (such as a camera) in an image capture or video capture mode. The display unit 1006 may include a display panel 10061, and the display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (for example, volume control button or on/off button), a trackball, a mouse, and a joystick. Details are not described herein.

In this embodiment of this application, the radio frequency unit 1001 receives downlink data from a network-side device and transfers the data to the processor 1010 for processing; and the radio frequency unit 1001 can additionally send uplink data to the network-side device. Generally, the radio frequency unit 1001 includes but is not limited to an antenna, an amplifier, a transceiver, a coupler, a low noise amplifier, a duplexer, and the like.

The memory 1009 may be configured to store software programs or instructions and various data. The memory 1009 may mainly include a first storage area for storing programs or instructions and a second storage area for storing data. The first storage area may store an operating system, an application program or instruction required by at least one function (for example, a sound play function or an image play function), and the like. Additionally, the memory 1009 may be a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in this embodiment of this application includes but is not limited to these or any other applicable types of memories.

The processor 1010 may include one or more processing units. Optionally, the processor 1010 integrates an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1010.

The processor 1010 is configured to obtain first information; and
the processor 1010 is configured to send location information of the terminal to a core network device based on the first information; where
the location information of the terminal is included in a first NAS message.

Optionally, the first information includes at least one of the following:
first indication information, where the first indication information is used to instruct the terminal to report the location information of the terminal, and the first indication information is received by the terminal from the core network device through a second NAS message;
first capability information, where the first capability information is used to indicate that the terminal supports a capability of reporting the location information of the terminal through a NAS message; and
first terminal type information, where the first terminal type information is used to indicate that the type of the terminal is narrow band internet of things NB-IoT terminal.

Optionally, the first NAS message includes any one of the following:
an attach complete message;
a registration complete message;
a service request message;
a packet data network connection PDN establishment request message;
a protocol data unit PDU session establishment request message; and
a dedicated NAS message for reporting the location information of the terminal; and
the second NAS message includes any one of the following:
   an attach accept message;
   a registration accept message; and
   a dedicated NAS message for instructing the terminal to report the location information.

Optionally, in a case that the first information is the first indication information, the processor 1010 is specifically configured to:
after receiving the first indication information, determine whether to agree to report the location information of the terminal, whether the location information of the terminal is valid, or whether the terminal supports the capability of reporting the location information of the terminal through a NAS message; and
in a case of determining that a user of the terminal agrees to report the location information of the terminal, that the location information of the terminal is valid, or that the terminal supports the capability of reporting the location information of the terminal through a NAS message, send the location information of the terminal to the core network device.

Optionally, the processor 1010 is specifically configured to:
after receiving the first indication information, determine at least one of the following based on second information:
whether to agree to report the location information of the terminal;
whether the location information of the terminal is valid; and
whether the terminal supports the capability of reporting the location information of the terminal through a NAS message; where
the second information is used to indicate whether the user of the terminal agrees to report the location information of the terminal, indicate validity of the location information of the terminal, or indicate whether the terminal supports the capability of reporting the location information of the terminal through a NAS message.

Optionally, the processor 1010 is configured to: in a case that the second information indicates that the user of the terminal does not agree to report the location information of the terminal, indicates that the location information of the terminal is invalid, or indicates that the terminal does not support the capability of reporting the location information of the terminal through a NAS message, send second indication information to the core network device; where
the second indication information is used to indicate that the terminal does not report the location information of the terminal or refuses to report the location information of the terminal.

Optionally, the second information is carried in the first NAS message.

Optionally, the processor 1010 is configured to send a first request message to the core network device, where the first request message includes the first capability information or second capability information; where
the second capability information is used to indicate that the terminal does not support the capability of reporting the location information of the terminal through a NAS message, and the first request message is used to request attachment or request registration.

An embodiment of this application further provides a network-side device including a processor and a communication interface. The communication interface is coupled to the processor, and the processor is configured to run a program or instructions to implement the steps of the foregoing access network device and core network device method embodiments. The network-side device embodiment corresponds to the foregoing network-side device method embodiment. All implementations in the foregoing method embodiment may be applicable to the network device embodiment, with the same technical effects achieved.

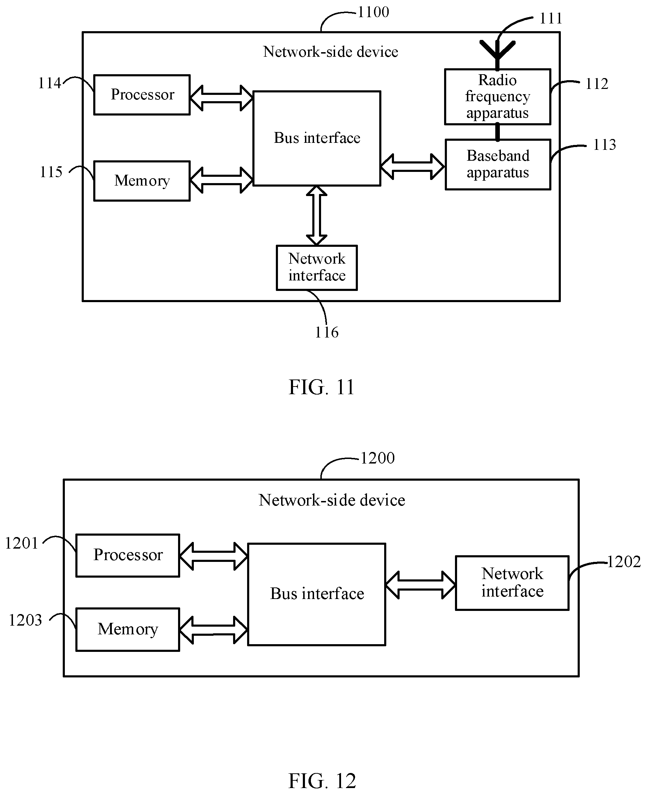

Specifically, an embodiment of this application further provides a network-side device. The network-side device is an access network device. As shown in FIG. 11, the network-side device 1100 includes an antenna 111, a radio frequency apparatus 112, a baseband apparatus 113, a processor 114, and a memory 115. The antenna 111 is connected to the radio frequency apparatus 112. Uplink, the radio frequency apparatus 112 receives information through the antenna 111, and sends the received information to the baseband apparatus 113 for processing. Downlink, the baseband apparatus 113 processes to-be-sent information, and sends the information to the radio frequency apparatus 112; and the radio frequency apparatus 112 processes the received information and then sends the information out through the antenna 111.

The method executed by the network-side device in the aforesaid embodiments may be implemented on the baseband apparatus 113. The baseband apparatus 113 includes a baseband processor.

The baseband apparatus 113 may include, for example, at least one baseband processing unit, where a plurality of chips are disposed on the baseband processing unit. As shown in FIG. 11, one of the chips is, for example, a baseband processor, and connected to the memory 115 through a bus interface, to invoke a program in the memory 115 to perform the operations of the network-side device shown in the foregoing method embodiments.

The network-side device may further include a network interface 116, where the interface is, for example, a common public radio interface (Common Public Radio Interface, CPRI).

Specifically, the network-side device 1100 in this embodiment of this application further includes instructions or a program stored in the memory 115 and capable of running on the processor 114. The processor 114 invokes the instructions or program in the memory 115 to execute the method executed by the modules shown in FIG. 7, with the same technical effects achieved. To avoid repetition, details are not described herein again.

Specifically, an embodiment of this application further provides a network-side device. The network-side device is a core network device. As shown in FIG. 12, the network-side device 1200 includes a processor 1201, a network interface 1202, and a memory 1203. The network interface 1202 is, for example, a common public radio interface (common public radio interface, CPRI).

Specifically, the network-side device 1200 in this embodiment of this application further includes instructions or programs stored on the memory 1203 and capable of running on the processor 1201. The processor 1201 invokes the instructions or programs in the memory 1203 to execute the method executed by the modules shown in FIG. 8, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing method embodiments are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disk. In some embodiments, the readable storage medium may be a non-transitory readable storage medium.

An embodiment of this application further provides a chip, where the chip includes a processor and a communication interface, the communication interface is coupled to the processor, and the processor is configured to run a program or instructions to implement the processes of the foregoing method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing method embodiments, with the same technical effects achieved. To avoid repetition, details are not described herein again.

An embodiment of this application further provides a wireless communication system including a terminal, an access network device, and a core network device, where the terminal is configured to perform the steps of the foregoing method on the terminal side, the access network device is configured to perform the steps of the foregoing method on the access network device side, and the core network device is configured to perform the steps of the foregoing method on the core network device side.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

From the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. The computer software product may be stored in a storage medium (for example, a ROM, a RAM, a magnetic disk, or an optical disk), and includes several instructions for instructing a terminal or network-side device to execute the method described in the embodiments of this application.

The foregoing describes the embodiments of this application with reference to the accompanying drawings. However, this application is not limited to the foregoing specific embodiments. These specific embodiments are merely for illustration rather than limitation. Inspired by this application, persons of ordinary skill in the art may develop many other forms of embodiments without departing from the essence of this application and the protection scope of the claims, and all such forms of embodiments shall fall within the protection scope of this application.

## Claims

1. A method for reporting location information, comprising:
obtaining, by a terminal, first information; and
sending, by the terminal based on the first information, location information of the terminal to a core network device; wherein
the location information of the terminal is comprised in a first non-access stratum NAS message.

2. The method according to claim 1, wherein the first information comprises at least one of the following:
first indication information, wherein the first indication information is used to instruct the terminal to report the location information of the terminal, and the first indication information is received by the terminal from the core network device through a second NAS message;
first capability information, wherein the first capability information is used to indicate that the terminal supports a capability of reporting the location information of the terminal through a NAS message; and
first terminal type information, wherein the first terminal type information is used to indicate that the type of the terminal is narrow band internet of things NB-IoT terminal.

3. The method according to claim 2, wherein
the first NAS message comprises any one of the following:
an attach complete message;
a registration complete message;
a service request message;
a packet data network connection PDN establishment request message;
a protocol data unit PDU session establishment request message; and
a dedicated NAS message for reporting the location information of the terminal; and
the second NAS message comprises any one of the following:
an attach accept message;
a registration accept message; and
a dedicated NAS message for instructing the terminal to report the location information.

4. The method according to claim 2, wherein in a case that the first information is the first indication information, the sending, by the terminal based on the first information, location information of the terminal to the core network device comprises:
after the terminal receives the first indication information, determining whether to agree to report the location information of the terminal, whether the location information of the terminal is valid, or whether the terminal supports the capability of reporting the location information of the terminal through a NAS message; and
in a case of determining that a user of the terminal agrees to report the location information of the terminal, that the location information of the terminal is valid, or that the terminal supports the capability of reporting the location information of the terminal through a NAS message, sending the location information of the terminal to the core network device.

5. The method according to claim 4, wherein the after the terminal receives the first indication information, determining whether to agree to report the location information of the terminal or whether the location information of the terminal is valid comprises:
after the terminal receives the first indication information, determining at least one of the following based on second information:
whether to agree to report the location information of the terminal;
whether the location information of the terminal is valid; and
whether the terminal supports the capability of reporting the location information of the terminal through a NAS message; wherein
the second information is used to indicate whether the user of the terminal agrees to report the location information of the terminal, indicate validity of the location information of the terminal, or indicate whether the terminal supports the capability of reporting the location information of the terminal through a NAS message.

6. The method according to claim 5, wherein the method further comprises:
in a case that the second information indicates that the user of the terminal does not agree to report the location information of the terminal, indicates that the location information of the terminal is invalid, or indicates that the terminal does not support the capability of reporting the location information of the terminal through a NAS message, sending second indication information to the core network device; wherein
the second indication information is used to indicate that the terminal does not report the location information of the terminal or refuses to report the location information of the terminal.

7. The method according to claim 6, wherein the second information is carried in the first NAS message.

8. The method according to claim 2, wherein the method further comprises:
sending, by the terminal, a first request message to the core network device, wherein the first request message comprises the first capability information or second capability information; wherein
the second capability information is used to indicate that the terminal does not support the capability of reporting the location information of the terminal through a NAS message, and the first request message is used to request attachment or request registration.

9. A method for receiving location information, comprising:
receiving, by a core network device from a terminal, location information of the terminal; wherein
the location information of the terminal is comprised in a first NAS message.

10. The method according to claim 9, wherein before the receiving, by the core network device from the terminal, the location information of the terminal, the method further comprises:
sending, by the core network device, first indication information to the terminal; wherein
the first indication information is comprised in a second NAS message, and the first indication information is used to instruct the terminal to report the location information of the terminal.

11. The method according to claim 9, wherein before the receiving, by the core network device from the terminal, the location information of the terminal, the method further comprises:
receiving, by the core network device, first capability information from the terminal, wherein the first capability information is used to indicate that the terminal supports a capability of reporting the location information of the terminal through a NAS message.

12. The method according to claim 11, wherein the first capability information is carried in at least one of the following messages:
an attach request message;
a registration request message; and
a dedicated NAS message for sending the first capability information.

13. The method according to any one of claims 9 to 12, wherein the method further comprises:
sending, by the core network device, the first indication information to the terminal based on at least one of the following: the first capability information, wherein the first capability information is used to indicate that the terminal supports the capability of reporting the location information of the terminal through a NAS message; and an access type of the terminal, wherein the access type of the terminal comprises NB-IoT.

14. The method according to claim 10, wherein
the first NAS message comprises any one of the following:
an attach complete message;
a registration complete message;
a service request message;
a PDN establishment request message;
a PDU session establishment request message; and
a dedicated NAS message for reporting the location information of the terminal; and
the second NAS message comprises any one of the following:
an attach accept message;
a registration accept message; and
a dedicated NAS message carrying a second indication.

15. The method according to claim 10, wherein after the sending, by the core network device, the first indication information to the terminal, the method further comprises:
receiving, by the core network device, second indication information from the terminal; wherein
the second indication information is used to indicate that the terminal does not report the location information of the terminal.

16. The method according to claim 9, wherein the method further comprises:
determining, by the core network device based on a mapping relationship between the location information and preconfigured area information of the terminal, the area information of the terminal.

17. The method according to claim 9, wherein the method further comprises:
sending, by the core network device, the location information of the terminal to an access network device; and
receiving, by the core network device, area information of the terminal from the access network device.

18. The method according to claim 17, wherein the sending, by the core network device, the location information of the terminal to the access network device comprises:
receiving, by the core network device, third information from the access network device, wherein the third information is used to indicate whether the access network device supports receiving or processing the location information of the terminal; and
in a case that the third information is used to indicate that the access network device supports receiving or processing the location information of the terminal, sending, by the core network device, the location information of the terminal to the access network device.

19. The method according to claim 15 or 18, wherein the method further comprises:
in a case that the core network device receives the second indication information from the terminal or that the third information is used to indicate that the access network device does not support receiving or processing the location information of the terminal, performing, by the core network device, at least one of the following:
obtaining the location information of the terminal through a NAS process of the terminal or a positioning process of the terminal;
rejecting a NAS request procedure of the terminal;
detaching the terminal; and
deregistering the terminal.

20. The method according to claim 16 or 17, wherein the method further comprises:
in a case of determining, based on the area information of the terminal, that a current area where the terminal is located does not allow performing of communication in a current PLMN, performing, by the core network device, rejection and release procedures of a NAS request;
or
in a case of determining, based on the area information of the terminal, that a current area where the terminal is located allows performing of communication in a current PLMN, performing, by the core network device, a processing procedure of a NAS request.

21. A method for processing location information, comprising:
receiving, by an access network device from a core network device, location information of a terminal;
determining, by the access network device based on the location information of the terminal, area information of the terminal; and
sending, by the access network device, the area information of the terminal to the core network device.

22. The method according to claim 21, wherein the receiving, by the access network device from the core network device, the location information of the terminal comprises:
sending, by the access network device, third information to the core network device, wherein the third information is used to indicate whether the access network device supports receiving or processing the location information of the terminal; and
in a case that the third information is used to indicate that the access network device supports receiving or processing the location information of the terminal, receiving, by the access network device from the core network device, the location information of the terminal.

23. An apparatus for reporting location information, comprising:
a first obtaining module, configured to obtain first information; and
a first sending module, configured to send location information of a terminal to a core network device based on the first information; wherein
the location information of the terminal is comprised in a first NAS message.

24. The apparatus according to claim 23, wherein the first information comprises at least one of the following:
first indication information, wherein the first indication information is used to instruct the terminal to report the location information of the terminal, and the first indication information is received by the terminal from the core network device through a second NAS message;
first capability information, wherein the first capability information is used to indicate that the terminal supports a capability of reporting the location information of the terminal through a NAS message; and
first terminal type information, wherein the first terminal type information is used to indicate that the type of the terminal is narrow band internet of things NB-IoT terminal.

25. The apparatus according to claim 24, wherein
the first NAS message comprises any one of the following:
an attach complete message;
a registration complete message;
a service request message;
a packet data network connection PDN establishment request message;
a protocol data unit PDU session establishment request message; and
a dedicated NAS message for reporting the location information of the terminal; and
the second NAS message comprises any one of the following:
an attach accept message;
a registration accept message; and
a dedicated NAS message for instructing the terminal to report the location information.

26. The apparatus according to claim 24, wherein in a case that the first information is the first indication information, the first sending module is specifically configured to:
after receiving the first indication information, determine whether to agree to report the location information of the terminal, whether the location information of the terminal is valid, or whether the terminal supports the capability of reporting the location information of the terminal through a NAS message; and
in a case of determining that a user of the terminal agrees to report the location information of the terminal, that the location information of the terminal is valid, or that the terminal supports the capability of reporting the location information of the terminal through a NAS message, send the location information of the terminal to the core network device.

27. The apparatus according to claim 26, wherein the first sending module is specifically configured to:
after receiving the first indication information, determine at least one of the following based on second information:
whether to agree to report the location information of the terminal;
whether the location information of the terminal is valid; and
whether the terminal supports the capability of reporting the location information of the terminal through a NAS message; wherein
the second information is used to indicate whether the user of the terminal agrees to report the location information of the terminal, indicate validity of the location information of the terminal, or indicate whether the terminal supports the capability of reporting the location information of the terminal through a NAS message.

28. The apparatus according to claim 27, wherein the apparatus further comprises:
a second sending module, configured to: in a case that the second information indicates that the user of the terminal does not agree to report the location information of the terminal, indicates that the location information of the terminal is invalid, or indicates that the terminal does not support the capability of reporting the location information of the terminal through a NAS message, send second indication information to the core network device; wherein
the second indication information is used to indicate that the terminal does not report the location information of the terminal or refuses to report the location information of the terminal.

29. The apparatus according to claim 28, wherein the second information is carried in the first NAS message.

30. The apparatus according to claim 24, wherein the apparatus further comprises:
a third sending module, configured to send a first request message to the core network device, wherein the first request message comprises the first capability information or second capability information; wherein
the second capability information is used to indicate that the terminal does not support the capability of reporting the location information of the terminal through a NAS message, and the first request message is used to request attachment or request registration.

31. An apparatus for receiving location information, comprising:
a first receiving module, configured to receive location information of a terminal from the terminal; wherein
the location information of the terminal is comprised in a first NAS message.

32. The apparatus according to claim 31, wherein the apparatus further comprises:
a fourth sending module, configured to: before receiving the location information of the terminal from the terminal, send first indication information to the terminal; wherein
the first indication information is comprised in a second NAS message, and the first indication information is used to instruct the terminal to report the location information of the terminal.

33. The apparatus according to claim 31, wherein the apparatus further comprises:
a second receiving module, configured to: before receiving the location information of the terminal from the terminal, receive first capability information from the terminal, wherein the first capability information is used to indicate that the terminal supports a capability of reporting the location information of the terminal through a NAS message.

34. The apparatus according to claim 33, wherein the first capability information is carried in at least one of the following messages:
an attach request message;
a registration request message; and
a dedicated NAS message for sending the first capability information.

35. The apparatus according to any one of claims 31 to 34, wherein the apparatus further comprises:
a fifth sending module, configured to send the first indication information to the terminal based on at least one of the following: the first capability information, wherein the first capability information is used to indicate that the terminal supports the capability of reporting the location information of the terminal through a NAS message; and an access type of the terminal, wherein the access type of the terminal comprises NB-IoT.

36. The apparatus according to claim 32, wherein
the first NAS message comprises any one of the following:
an attach complete message;
a registration complete message;
a service request message;
a PDN establishment request message;
a PDU session establishment request message; and
a dedicated NAS message for reporting the location information of the terminal; and
the second NAS message comprises any one of the following:
an attach accept message;
a registration accept message; and
a dedicated NAS message carrying a second indication.

37. The apparatus according to claim 32, wherein the apparatus further comprises:
a third receiving module, configured to: after sending the first indication information to the terminal, receive second indication information from the terminal; wherein
the second indication information is used to indicate that the terminal does not report the location information of the terminal.

38. The apparatus according to claim 31, wherein the apparatus further comprises:
a first determining module, configured to determine, based on a mapping relationship between the location information and preconfigured area information of the terminal, the area information of the terminal.

39. The apparatus according to claim 31, wherein the apparatus further comprises:
a sixth sending module, configured to send the location information of the terminal to an access network device; and
a fourth receiving module, configured to receive area information of the terminal from the access network device.

40. The apparatus according to claim 39, wherein the sixth sending module is specifically configured to:
receive third information from the access network device, wherein the third information is used to indicate whether the access network device supports receiving or processing the location information of the terminal; and
in a case that the third information is used to indicate that the access network device supports receiving or processing the location information of the terminal, send the location information of the terminal to the access network device.

41. The apparatus according to claim 37 or 40, wherein the apparatus further comprises:
a fifth receiving module, configured to: in a case that the second indication information is received from the terminal or that the third information is used to indicate that the access network device does not support receiving or processing the location information of the terminal, perform at least one of the following:
obtain the location information of the terminal through a NAS process of the terminal or a positioning process of the terminal;
reject a NAS request procedure of the terminal;
detach the terminal; and
deregister the terminal.

42. The apparatus according to claim 38 or 39, wherein the apparatus further comprises:
an execution module, configured to:
in a case of determining, based on the area information of the terminal, that a current area where the terminal is located does not allow performing of communication in a current PLMN, perform rejection and release procedures of a NAS request;
or
in a case of determining, based on the area information of the terminal, that a current area where the terminal is located allows performing of communication in a current PLMN, perform a processing procedure of a NAS request.

43. An apparatus for processing location information, comprising:
a sixth receiving module, configured to receive location information of a terminal from a core network device;
a second determining module, configured to determine area information of the terminal based on the location information of the terminal; and
a seventh sending module, configured to send the area information of the terminal to the core network device.

44. The apparatus according to claim 43, wherein the sixth receiving module is specifically configured to:
send third information to the core network device, wherein the third information is used to indicate whether the access network device supports receiving or processing the location information of the terminal; and
in a case that the third information is used to indicate that the access network device supports receiving or processing the location information of the terminal, receive the location information of the terminal from the core network device.

45. A terminal, comprising a processor and a memory, wherein the memory stores a program or instructions capable of running on the processor, and when the program or instructions are executed by the processor, the steps of the method for reporting location information according to any one of claims 1 to 8 are implemented.

46. A network-side device, comprising a processor and a memory, wherein the memory stores a program or instructions capable of running on the processor, and when the program or instructions are executed by the processor, the steps of the method for receiving location information according to any one of claims 9 to 20 are implemented, or the steps of the method for processing location information according to claim 21 or 22 are implemented.

47. A readable storage medium, wherein the readable storage medium stores a program or instructions, and when the program or instructions are executed by a processor, the steps of the method for reporting location information according to any one of claims 1 to 8 are implemented, the steps of the method for receiving location information according to any one of claims 9 to 20 are implemented, or the steps of the method for processing location information according to claim 21 or 22 are implemented.
